# EUROPEAN PATENT APPLICATION

(11) **EP 4 671 206 A1**
(43) Date of publication of application: **31.12.2025**
(21) Application number: 23924155.7
(22) Date of filing: 19.10.2023
(51) Int. Cl.: C01B 32/184, G02B 6/13

(54) **GRAPHENE GROWTH METHOD AND GRAPHENE DEVICE PRODUCTION METHOD**

(30) Priority: 22.02.2023 JP 2023026252; 10.04.2023 JP 2023063503
(71) Applicant: Keio University, Tokyo, 108-8345 (JP)
(72) Inventor: MAKI, Hideyuki, Yokohama-shi, Kanagawa 223-8522 (JP)
(74) Representative: Witte, Weller & Partner Patentanwälte mbB
(86) International application number: PCT/JP2023/037901
(87) International publication number: WO 2024/176511

(57) **Abstract**

A method for growing a multilayer graphene layer on a substrate by a simple process while restricting any impact on the substrate is provided. The graphene growing method includes: forming a carbon-containing metal thin film containing carbon in an amount exceeding the solid solubility solution on a substrate as a single layer, such that carbon content in the carbon-containing metal thin film is 3mol% or greater and 98mol% or less, subjecting the carbon-containing metal thin film to thermal treatment without introduction of a carbon raw material gas using an organic molecule, to form graphene and separating the metal contained in the carbon-containing metal thin film, and removing the metal separated, after completion of the thermal treatment.

## Description

### TECHNICAL FIELD

The present invention relates to a graphene growing method and a method for manufacturing a graphene device by applying graphene to optical devices and thermal devices.

### BACKGROUND ART

As optical integrated devices, which are optical devices integrated on chips, optical semiconductor devices mainly using compound semiconductor materials have been integrated on semiconductor or insulator substrates, such as silicon or silicon oxide. Recently, integrated optical devices on chips, using not only compound semiconductors but also nanocarbon materials, such as graphene and the like, have been reported.

As integrated optical devices on silicon chips, silicon photonics optical integrated devices, such as optical switches including microheaters in silicon optical waveguides and the like, are attracting attention. Traditionally, metal heaters, such as titanium and the like, have been mainly used as these microheaters. Silicon photonics devices including, instead of metal microheaters, microheaters made of single-layer graphene or multilayer graphene ranging from some layers to some hundreds of layers (hereinafter, single-layer or multilayer graphene is collectively referred to as "graphene") have been reported in recent years.

When forming graphene on silicon photonics chips, a method of transferring graphene that is mechanically peeled off using an adhesive tape or graphene that is grown on metal single crystals or the like by Chemical Vapor Deposition (CVD) onto chips have been used. The transfer method has been widely used in graphene integrated optical devices as well, because the method can transfer already produced graphene onto various chips. However, it is costly to transfer thin graphene of the nanometer order onto chips, and mass-production for practical use is challenging.

As a technology for forming graphene directly on substrates, there is a method of growing graphene using a multilayer film including a solid carbon layer and metal layers (see, for example, PTL 1). This method forms a laminate having a multilayer structure in which pure metal films serving as a catalyst are formed on top and bottom of a pure carbon layer serving as a solid carbon source, and thermally treats the laminate, to form a thin graphene film on a substrate. Also known is a method of forming a solid solution layer in which a solid carbon solute is dissolved in a solid metal solvent, and then removing the metal while keeping the solid solution heated, to precipitate carbon and form graphene (see, for example, PTL 2).

### CITATION LIST

### PATENT LITERATURE

PTL 1: International Publication No. WO 2019/176705
PTL 2: Japanese Patent No. 5152945

### SUMMARY OF THE INVENTION

### TECHNICAL PROBLEM

A multilayer structure in which a solid carbon layer and metal layers are laminated as in PTL 1 requires formation of metal layers serving as a catalyst on top and bottom of a solid carbon source, which involves many manufacturing steps and is costly. The total thickness of the metal layers included in the multilayer structure is thick, and the number of moles in the metal layers is greater than that in the carbon layer. When forming graphene on a substrate on which an optical or a thermal device is formed, the metal element thermally diffuses from the metal layer that is in contact with the substrate and might damage the underlying device. In the method using a solid solution of carbon as in PTL 2, there is a solid solubility limit on the amount of carbon to be contained. A solid solution layer is formed by forming a thin film of carbon on a surface of a metal layer, and heating this laminate up to the solid-soluble temperature. Here, the amount of carbon that forms a solid solution with the metal layer is typically a few percent. In addition, the number of graphene layers to be formed is limited, and it is difficult to form a thick graphene layer. Since the metal is dominant in the solid solution, thermal diffusion of the metal element might damage the underlying device. In addition to the methods described above, there is a method of forming graphene by heating silicon carbide, but it generally requires treatment at a very high temperature of approximately 1,200°C to 1,500°C, and cannot be applied to growing graphene on a substrate on which an optical device or a thermal device is formed. In addition, since it is necessary to use a silicon carbide single-crystal substrate, the material is limited to the silicon carbide, and graphene cannot be formed on a device using an insulator or a semiconductor that is used in common devices, such as silicon or silicon oxide.

One object of the present invention is to provide a graphene growing method for growing multilayer graphene on a substrate by a simple process while restricting any impact on the substrate. Also provided is a graphene growing method that has minimal impact on or causes minimal damage to devices previously manufactured.

### SOLUTION TO THE PROBLEM

In one aspect of the present invention, a graphene growing method includes:
forming a carbon-containing metal thin film containing carbon as a single layer on a substrate, such that the carbon-containing metal thin film contains the carbon in an amount exceeding a solid solubility limit and a content of the carbon in the carbon-containing metal thin film is 3mol% or greater and 98mol% or less;
subjecting the carbon-containing metal thin film to thermal treatment without introduction of a carbon raw material gas using an organic molecule, to form graphene, and separating a metal contained in the carbon-containing metal thin film; and
removing the metal separated, after completion of the thermal treatment.

### ADVANTAGEOUS EFFECTS OF THE INVENTION

It is possible to grow multiple graphene layers on a substrate with a simple process while restricting impact on the substrate and devices. In addition, a graphene growing method that has minimal impact on or causes minimal damage to devices previously manufactured is realized.

### BRIEF DESCRIPTION OF THE DRAWINGS

[FIG. 1] FIG. 1 shows diagrams of a process for growing graphene according to an embodiment.
[FIG. 2] FIG. 2 is a flowchart of a graphene growing method according to an embodiment.
[FIG. 3] FIG. 3 shows diagrams of a process for manufacturing a graphene device according to an embodiment.
[FIG. 4] FIG. 4 shows a microscopic image and a Raman spectrum diagram of graphene at a carbon content of 3mol% with respect to a carbon-containing metal.
[FIG. 5] FIG. 5 shows a microscopic image (and a Raman spectrum diagram) of graphene at a carbon content of 10mol% with respect to a carbon-containing metal.
[FIG. 6] FIG. 6 shows a microscopic image and a Raman spectrum diagram of graphene at a carbon content of 20mol% with respect to a carbon-containing metal.
[FIG. 7] FIG. 7 shows a microscopic image and a Raman spectrum diagram of graphene at a carbon content of 30mol% with respect to a carbon-containing metal.
[FIG. 8] FIG. 8 shows a microscopic image and a Raman spectrum diagram of graphene at a carbon content of 66mol% with respect to a carbon-containing metal.
[FIG. 9] FIG. 9 shows a microscopic image and a Raman spectrum diagram of graphene at a carbon content of 83mol% with respect to a carbon-containing metal.
[FIG. 10] FIG. 10 shows a microscopic image and a Raman spectrum diagram of graphene at a carbon content of 90mol% with respect to a carbon-containing metal.
[FIG. 11] FIG. 11 shows a microscopic image and a Raman spectrum diagram of graphene at a carbon content of 98mol% with respect to a carbon-containing metal.
[FIG. 12] FIG. 12 shows images and a schematic diagram of a manufactured graphene device.
[FIG. 13A] FIG. 13A shows an image of another manufactured graphene device.
[FIG. 13B] FIG. 13B shows an image of yet another manufactured graphene device.
[FIG. 14] FIG. 14 shows an image of yet another manufactured graphene device.
[FIG. 15] FIG. 15 shows diagrams of a process for manufacturing a bridged graphene device.
[FIG. 16] FIG. 16 shows an electron microscopic image of a manufactured bridged graphene device.

### DETAILED DESCRIPTION OF THE INVENTION

Embodiments for carrying out the invention will be described below with reference to the drawings. The following embodiments are examples for implementing the technical idea of the invention, and are not intended to limit the invention to the configurations and numerical values specified below. Components having the same function in the drawings may be assigned the same reference numerals and duplicate descriptions of them may be omitted. Partial replacement or combination between different embodiments or configuration examples is possible. The size, positional relationship, and the like of the members shown in the drawings may be exaggerated to facilitate understanding of the invention. When "above", "on top of", and the like, and "under", "on bottom of", and the like are used in any positional relationships, they mean "above", "on top of", and the like, and "under", "on bottom of", and the like in the layer lamination direction or growing direction, and do not mean absolute directions.

In the embodiments, a graphene layer having a sufficient thickness is directly grown on a substrate. Even when an optical device or a thermal device is previously formed on the substrate, a graphene layer having a desired size and a desired shape is formed to a desired thickness with minimal impact on the substrate or the devices. The graphene layer can be used not only as a light emitting material for a light emitting element and a light absorbing material for a light receiving element, but also as a microheater for controlling operations and characteristics of optical devices or thermal devices.

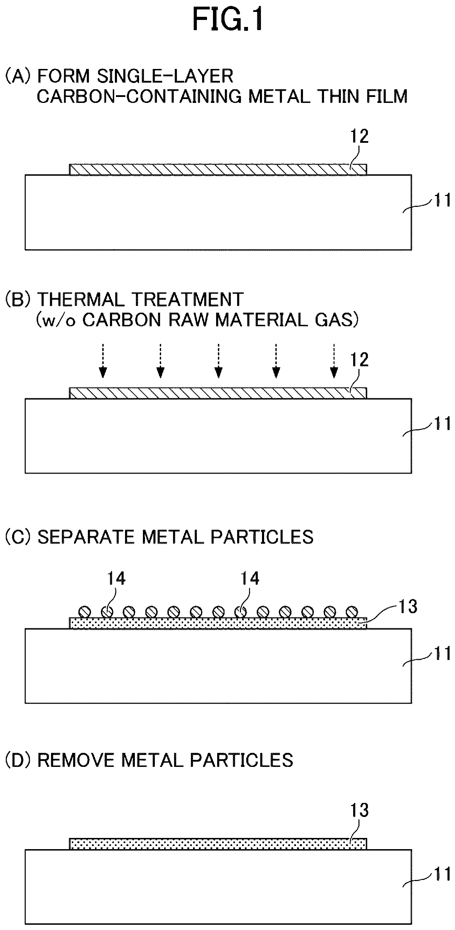

FIG. 1 shows diagrams of a process for growing graphene according to an embodiment. A graphene growing method according to an embodiment forms graphene directly on a substrate 11 without using transfer or necessitating introduction of a carbon raw material gas using organic molecules, such as hydrocarbon gas and the like. In FIG. 1 (A), a carbon-containing metal thin film 12 is formed as a single layer on the substrate 11. "Single layer" means that it is not a multilayer structure in which multiple layers are laminated, and the carbon-containing metal thin film 12 can be designed to have a desired thickness. The substrate 11 is a SiO2 substrate, a Si substrate with a SiO2 film, a sapphire substrate, and the like. The single-layer carbon-containing metal thin film 12 is formed by physical vapor deposition methods, such as magnetron sputtering, electron beam deposition, ion plating, and the like. By adjusting the composition ratio between a metal target and a solid carbon target, it is possible to form the film to have a desired carbon content. The carbon-containing metal thin film 12 may be formed by room temperature sputtering. The carbon content in the carbon-containing metal thin film 12 formed by a physical vapor deposition method using a solid carbon target and a metal target is independent of the solid solubility limit of the carbon, and a desired carbon content exceeding the solid solubility limit can be achieved. High-quality polycrystalline graphene can be obtained when the carbon content with respect to the carbon-containing metal is 3mol% or greater and 98mol% or less, preferably 5mol% or greater and 98mol% or less, and more preferably 10mol% or greater and 98mol% or less.

As the metal contained in the carbon-containing metal thin film, not only metals having a high solid solubility limit for carbon, such as Ni, Fe, Co, and the like, but also metals having a low solid solubility limit for carbon, such as Pt, Cu, Ir, and the like can be used, and Zn may be added to these metals. In Examples, Ni is used. Multilayer polycrystalline graphene is grown on the substrate 11 by use of a small amount of a metal, enabled by using the carbon-containing metal thin film 12. The substrate 11 may be a semiconductor substrate, such as silicon, compound semiconductors, and the like, or an insulating substrate, such as silicon oxide, aluminum oxide, magnesium oxide, calcium fluoride, and the like. The carbon-containing metal thin film 12 may be formed by co-sputtering using a carbon target and a metal target, or by sputtering using one target containing carbon and the metal. The sputtering may be performed at any temperature, and may be performed at room temperature or during substrate heating.

The carbon-containing metal thin film 12 may be formed on the entire surface of the substrate 11, or may be formed in a predetermined region on the substrate 11 to have a desired shape and a desired size using lithography technology or microfabrication technology. When the carbon-containing metal thin film 12 is formed on a partial region of the substrate 11, the grown graphene can be used as a functional material as is without etching the graphene in a subsequent step. When the carbon-containing metal thin film 12 is formed on the entire surface of the substrate 11, the graphene may be processed to a desired shape after the graphene is formed.

In FIG. 1 (B), the substrate 11 on which the carbon-containing metal thin film 12 is formed is subjected to thermal treatment without introduction of a carbon raw material gas using organic molecules, such as hydrocarbon gas and the like. Thermal treatment changes the carbon-containing metal thin film 12. That is, even without introduction of a carbon raw material gas containing organic molecules, carbon precipitates from the carbon-containing metal thin film 12, adsorbs to the substrate 11, and shifts from two-dimensional growth of graphene to three-dimensional growth through recrystallization. In the meantime, the metal acting as a catalyst precipitates from the carbon-containing metal thin film 12 and is separated onto graphene.

The thermal treatment is performed by heating in a gas-exhausted atmosphere, such as in a vacuum, at reduced pressure, and the like, or in an atmosphere containing: an inert gas, such as argon gas, nitrogen gas, and the like; or a reducing gas, such as hydrogen and the like, or a combination thereof. When oxygen is contained in the atmosphere, graphene is damaged through reacting with oxygen. Therefore, the thermal treatment in an atmosphere containing no oxygen is desirable. Unlike in an ordinary graphene growing method of introducing a carbon raw material gas, such as methane gas and the like, and reacting it with a catalyst metal, no carbon raw material gas containing organic molecules, such as hydrocarbon gas and the like, is introduced in the thermal treatment. Such a thermal treatment changes the carbon-containing metal thin film 12, thereby forming multilayer graphene. At the same time, the metal precipitates on the multilayer graphene in a granular form or in a coarse thin film form. A system configured to heat the entirety of the substrate 11, such as an electric furnace, may be used for the thermal treatment.

Heating by laser light is localized and intense, making uniform heating difficult and posing a risk of damage to the substrate 11 caused by the laser light. In particular, when optical devices or thermal devices are built in lower layers on the substrate 11, the devices may be damaged by the laser light irradiation. On the other hand, heating in an electric furnace can uniformly heat the carbon-containing metal thin film 12 on the substrate 11, and grow high-quality graphene. For example, an infrared heating furnace may be used as the electric furnace.

The thermal treatment temperature is in a range of, for example, 800°C to 1,200°C. There is a tendency that the higher the temperature, the better the quality of the multilayer graphene, and the higher the heatproof temperature of the optical devices and the thermal devices formed on the substrate 11. However, if the substrate 11 includes parts having a low heat resistance, such as metals and the like, selecting a lower thermal treatment temperature of approximately 800°C makes it possible to avoid damage to the substrate 11.

A higher temperature raising rate is preferable in the thermal treatment, and it is possible to obtain high-quality multilayer graphene quickly by using a high-speed thermal treatment furnace, such as an infrared heating furnace. Since the entire substrate is heated in an infrared heating furnace or the like, it is possible to form a high-quality graphene layer on a large area at low cost and high productivity. If Zn is contained in the carbon-containing metal thin film 12, the thermal treatment temperature can be lowered, and can be lowered to as low as approximately 400°C. When steep temperature raising is possible, the thermal treatment time may be within 10 minutes, within 5 minutes, or for approximately some minutes.

In FIG. 1 (C), the thermal treatment proceeds, a most part of the carbon-containing metal thin film 12 changes to a graphene layer 13, and metal particles or metal thin film pieces are separated onto the graphene layer 13. The metal particles and the metal thin film pieces are collectively referred to as "metal particles 14".

In FIG. 1 (D), after the completion of the thermal treatment or after the completion of the formation of the graphene layer 13, the metal particles 14 are removed. For example, the metal particles 14 are removed by wet etching using a solution that dissolves metals, such as acids, iron chloride, and the like, or dry etching using an etching gas, such as chlorine and the like. When using etching gas, it is possible to set the etching temperature to be lower than the thermal treatment temperature at which graphene is grown. Thus, since graphene can be grown at a temperature higher than the etching temperature, high-quality graphene can be obtained on the substrate 11 and the graphene layer 13 having a sufficient thickness can be formed.

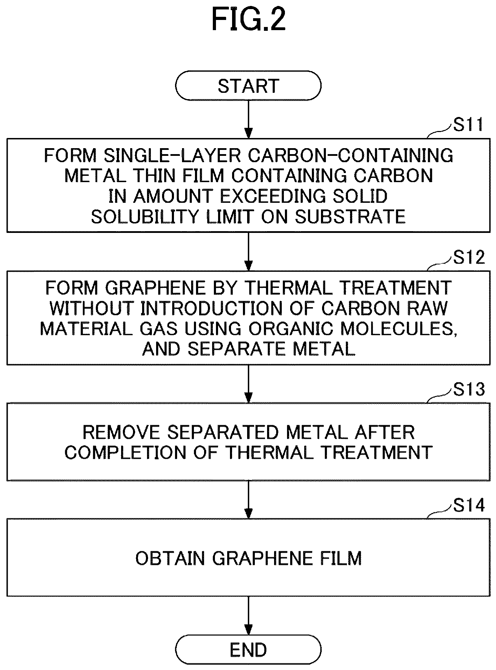

FIG. 2 is a flowchart of the graphene growing method of FIG. 1. First, the single-layer carbon-containing metal thin film 12 containing carbon in an amount exceeding the solid solubility limit is formed on the substrate 11 (S11). This step corresponds to (A) in FIG. 1, and the carbon content with respect to the carbon-containing metal thin film 12 can be set to a desired ratio of 3mol% or greater and 98mol% or less. Next, graphene is produced by the thermal treatment without introduction of a carbon raw material gas containing organic molecules, such as hydrocarbon gas and the like, and the metal is separated (S12). This step corresponds to (B) and (C) in FIG. 1. After the completion of the thermal treatment, the separated metal is removed (S13). This step corresponds to (D) in FIG. 1. By removing the metal, it is possible to obtain the graphene layer 13 having a desired thickness (S14).

By the method shown in FIGS. 1 and 2, a large amount of a graphene layer 13 having a desired size and a desired shape can be grown at a low cost. Multilayer graphene is successively produced under the effect of the metal contained in the single-layer carbon-containing metal thin film 12. A very small amount of metal is required to enable graphene formation. Therefore, a major feature about the amount of carbon to be contained in the metal thin film is that carbon can be contained regardless of the solid solubility limit of the carbon. Therefore, it is possible to form multilayer graphene even by previously allowing the metal thin film to contain carbon in an amount exceeding the solid solubility limit. Unlike the existing methods, it is unnecessary to form a multilayer structure in which a solid carbon source and metal layers are laminated as separate layers. In addition, unlike the graphene growing convention in which the amount of carbon is limited to equal to or less than the solid solubility limit, it is possible to form multilayer graphene without taking into consideration the solid solubility limit of the metal used for graphene growth. Furthermore, unlike the common graphene growing methods in which hydrocarbon gas is introduced and reacted with the catalyst metal, it is possible to grow graphene by simply thermally treating the carbon-containing metal thin film 12 formed as a single layer.

That is, during formation of the multilayer graphene (S12), the thermal treatment is performed simply in a vacuum or at reduced pressure, or under an inert gas, such as argon gas, nitrogen gas, and the like, or a reducing gas, such as hydrogen and the like, without introduction of a carbon raw material gas containing organic molecules, such as hydrocarbon gas and the like. Advantageously, not only is it unnecessary to introduce a carbon raw material gas containing organic molecules, but also it is unnecessary to introduce etching gas (e.g., chlorine gas and the like) for removing the metal during formation of the multilayer graphene, unlike in the existing technology.

As described above, the single-layer carbon-containing metal thin film 12 is separated into multilayer graphene and granular or coarse thin-film-shaped metal through the thermal treatment (see FIG. 1 (C)). In this process, multilayer graphene is resistant to etching solutions, such as acids, iron chloride, and the like, and to etching gases, such as chlorine and the like. Only the separated metal is removed by etching solutions, such as acids, iron chloride, and the like, and etching gases, such as chlorine and the like, to which the metal is not resistant. The metal used in the embodiment, for example, Ni, Fe, or Co, or a mixture thereof can be easily removed by etching, because the metal is separated onto the graphene layer 13 in a granular or coarse thin-film form after the formation of the multilayer graphene.

It is possible to perform the etching of the separated metal at room temperature by cooling the substrate to room temperature after the completion of the thermal treatment. Alternatively, it is possible to perform the etching under heating at a temperature lower than the thermal treatment temperature for the formation of the multilayer graphene described above (at a temperature lower than the thermal treatment temperature by 100°C or more). Unlike the existing methods, it is unnecessary to perform the etching during the thermal treatment at a high temperature, and it is possible to remove the unwanted precipitated metal easily under low-temperature heating, at room temperature, or under cooling.

The graphene growing method of the embodiment can form multilayer polycrystalline graphene including from two atomic layers to some thousand atomic layers. It is possible to control the number of layers in the graphene by changing the thickness of the carbon-containing metal thin film 12 formed as a single layer. It is possible to control the number of layers in the multilayer graphene by controlling the temperature of the thermal treatment on the carbon-containing metal thin film 12. Thus, multilayer graphene is formed in a simple process at a reduced process cost. The method of the embodiment is a method of forming a metal thin film as a single layer containing carbon exceeding the solid solubility limit as a film for graphene growth. However, cases where thin films of metals, semiconductors, insulators, and the like that do not affect graphene growth exist in overlying layers or underlying layers of the carbon-containing metal thin film 12 are included in the scope of the method of the present invention as long as the carbon-containing metal thin film 12 exceeding the solid solubility limit is formed as the film for graphene growth.

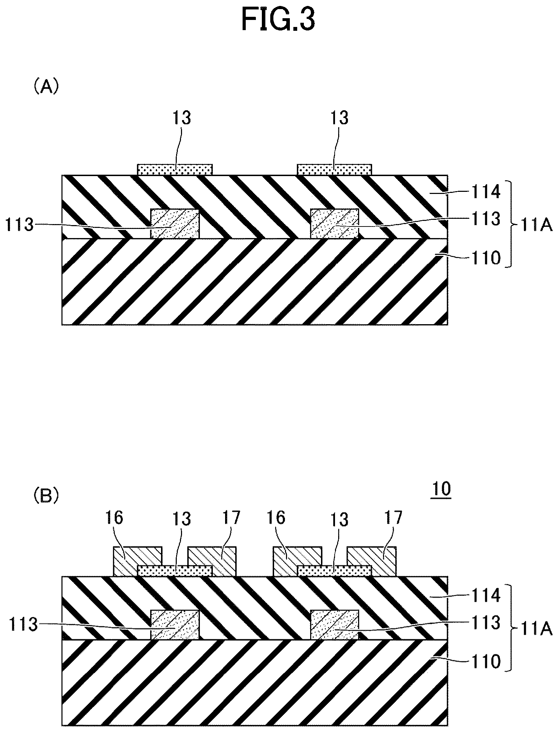

FIG. 3 shows diagrams of a process for manufacturing a graphene device according to an embodiment. Hereinafter, a device to which the above-described graphene layer is applied is referred to as a "graphene device". The graphene device encompasses a device obtained by applying the above-described graphene layer 13 to an optical device, a thermal device, an electronic device, or a mechanical device previously formed on the substrate 11. Examples of the optical device include a silicon photonics device formed on a substrate, and all types of optical devices and photonic structures formed on substrates. An optical device may be any optical device or photonic structure formed on a substrate, such as an optical waveguide, an optical switch, an optical resonator, an optical filter, an optical modulator, an interference element, a phase modulator, a polarizing element, a spectroscopic element, and a transparent conductive film, and a light emitting element a light receiving element, and the like formed on substrates in silicon photonics. A thermal device may be any element that uses graphene as a heat source. The graphene is applicable to thermal devices that utilize heating by power feeding to the graphene and phenomena attributable to temperature changes in the graphene, such as elements on various substrates, such as microheaters element using graphene, optical devices utilizing a thermo-optic effect, electronic devices, optical devices, and mechanical devices utilizing local heating, and the like, a light source utilizing radiation by heat, a light receiving element utilizing heat, such as a bolometer and the like, a microchannel heat exchanger, and the like. The graphene can also be applied to micromechanical devices formed on substrates, such as Micro Electro Mechanical Systems (MEMS) formed on substrates, devices utilizing mechanical properties of a cantilever, and the like. The graphene can be applied not only to microdevices, but also to macroscopic optical materials (transparent window materials and transparent conductive films) and macroscopic electrically conductive layers and electrodes, and can be applied as graphene-using surface-modifying or function-imparting technologies for glass materials and the like, such as antireflection technologies and antifouling technologies for plate materials.

Hereinafter, as an example, a method for manufacturing a graphene device, which is an application of the graphene layer 13 to an optical device on a silicon chip, will be described. However, the present invention is not limited to the following example. The substrate to be used is not limited to a silicon substrate. Substrates made of semiconductors, insulators, and glass materials, such as surface-oxidized silicon substrates, Silicon on Insulator (SOI) substrates, quartz substrates, silicon oxide substrates, aluminum oxide substrates, magnesium oxide substrates, calcium fluoride substrates and the like, can be used.

A configuration in which the graphene layer 13 is applied to an optical device will be described as an example. However, the method for manufacturing a graphene device described below can also be applied to a thermal device on a chip using multilayer graphene as a microheater, an optical/thermal device in which an optical device and a thermal device are combined, and the like. As extension from thermal devices, power-feeding electrical wirings on chips, through which high currents can be flowed, are also included in the applicable range. According to the today's technologies, metal wirings are used as power-feeding electrical wirings, which however are broken when high currents are flowed, due to getting heated or electromigration. On the other hand, by using graphene, it is possible to provide electrical wirings exhibiting a good heat resistance against heat generated when high currents are flowed. By using the method for manufacturing a graphene device of the embodiment, it is possible to manufacture electrical wirings that are simpler and more heat-resistant than existing multilayer graphene electrical wirings.

As a configuration example, consideration will be given to optical devices integrated on a silicon chip. In this case, it is possible to manufacture optical devices, such as light emitting elements, light receiving elements, and the like, by using multilayer graphene, and it is possible to manufacture variously modified optical and thermal devices, such as optical switches, light intensity modulation elements, phase modulation elements, and the like, by using multilayer graphene as microheaters. When manufacturing these elements on chips, existing methods have transferred graphene mechanically peeled off using an adhesive tape or graphene grown on a metal single crystal by a CVD method onto the chips toward the optical devices previously formed on the silicon chips. As compared, according to the embodiment, multilayer graphene is directly formed on the optical devices on the chips without using transfer. Since multilayer graphene can be accurately formed on the optical devices by the method simpler than the existing methods, it is possible to manufacture high-quality, low-cost multilayer graphene optical devices.

In FIG. 3 (A), an optical waveguide 113 constituting at least a part of an optical device is previously formed on a substrate 11A. The optical waveguide 113 is formed by etching a silicon thin film formed on an oxide film 110 of, for example, an SOI substrate, and serves as a constituent of a silicon photonics device. Although the optical waveguide 113 is shown as a silicon thin-wire waveguide, the waveguide type is no object in silicon photonics devices, and may be a rib-type waveguide, a photonic crystal, and the like. Metal parts, such as electrodes necessary for purposes like power feeding to the optical devices and the like, are manufactured after the graphene layer is formed. An insulating layer 114 is formed to cover the optical waveguide 113. The oxide film 110 functions as a lower clad, and the insulating layer 114 functions as an upper clad. In this example, the optical waveguide 113 can form, for example, an optical switch or an optical modulator of a ring resonator type or a Mach-Zehnder (MZ) type.

The graphene layer 13 is formed on the substrate 11A on which the optical waveguide 113 is formed. The graphene layer 13 is formed by the method described with reference to FIGS. 1 and 2, and is formed by thermally treating the single-layer carbon-containing metal thin film 12 containing carbon in an amount exceeding the solid solubility limit. Since it is possible to form the carbon-containing metal thin film 12 at an accurate position with an accurate shape by a lithography method or the like, it may be formed only at a necessary position above the optical waveguide 113. Alternatively, the carbon-containing metal thin film 12 may be formed on the entire surface of the substrate 11A, and after the graphene layer is obtained ultimately, the graphene layer 13 may be processed so as to remain in the required region of the substrate 11A.

Since the optical device formed of the optical waveguide 113 on the substrate 11A does not contain any metal parts, such as electrodes and the like, it is possible to form graphene from the carbon-containing metal thin film 12 through thermal treatment with the entirety of the substrate 11A put in an electric furnace. As described above, the introduction of a carbon raw material gas containing organic molecules is unnecessary in this thermal treatment. The amount of the metal contained in the single-layer carbon-containing metal thin film 12 is small. Unlike the existing methods in which a pure metal film or a metal-dominant solid solution is in direct contact with the substrate 11A, damage to the underlying optical device formed of the optical waveguide 113 is small. In the electric furnace, formation of multilayer graphene proceeds rapidly under the effect of the metal in the small amount, which minimizes impact on the underlying optical device. Through the thermal treatment for formation of graphene, the optical devices, such as optical switches and the like formed on the substrate 11A, become heat-tolerant.

After the formation of multilayer graphene is completed, the precipitated metal is removed by etching. As described above, it is unnecessary to remove the metal by etching during the thermal treatment, thus simplifying the process. After the thermal treatment, the metal precipitated on the graphene layer 13 is removed by dry etching or wet etching, to obtain the structure shown in FIG. 3 (A).

In FIG. 3 (B), electrodes 16 and 17 to be connected to the graphene layer 13 are formed, to obtain a graphene device 10. It is preferable to form heat-sensitive metal electrodes after the formation of the graphene layer 13. Although the above process is a typical method, it is also possible to add optical devices, such as optical waveguides, resonators, and the like, and photonic structures, such as light sources and light receiving elements after the formation of the graphene layer 13.

The method for manufacturing a graphene device shown in FIG. 3 is characterized in that, after an optical device or thermal device structure is previously formed on the substrate 11, the multilayer graphene layer 13 can be formed directly on or near the optical device or thermal device. The optical device or thermal device exists directly under the graphene layer 13, and the graphene and the device are positioned closely to each other, thereby improving the performance of the optical device or the thermal device. Because of being unable to avoid the impact of diffusion of the metal used for graphene growth, the existing large-area graphene growing methods manufacture optical device and thermal device structures after growing graphene and processing it into a desired shape. On the other hand, the method of the embodiment shown in FIG. 3 can form a necessary graphene layer 13 by a simple process at a desired position on an integration substrate, on which optical devices or thermal devices are formed by the silicon photonics technology. This increases the degree of latitude allowed in the device designing, and reduces the cost significantly as well.

The capability of forming the graphene layer 13 on an optical device or a thermal device is a major feature. However, unless it is necessary to provide an optical device under the graphene layer previously, an optical or thermal graphene device may be obtained by forming electrodes and the like after directly forming graphene on a substrate on which no devices have been formed. The method of the embodiment is also useful as a mass production method for optical devices and thermal devices.

The method of the embodiment is a new manufacturing process that does not require transfer of graphene. Compared with the transfer method, it is possible to form multilayer graphene easily even on structures having a low mechanical strength. For example, it is possible to form multilayer graphene easily even on microdevices having a low mechanical strength, such as minute beam structures made of semiconductor materials, and microdevices having minute protruding or recessed structures.

The method of this embodiment is applicable not only to functional optical devices, such as light emitting devices, optical resonators, and the like formed on chips, but also to all types of devices that use graphene, such as graphene devices in which the graphene layer 13 is combined with a light transmissive film or a transparent conductive film, graphene electronic devices including graphene electrode wirings, graphene devices in which the graphene layer 13 is combined with MEMS devices, and the like. Specific applications of the graphene growing method and the method for manufacturing a graphene device will be described below.

### <Microscopic Image and Raman Spectra of Graphene>

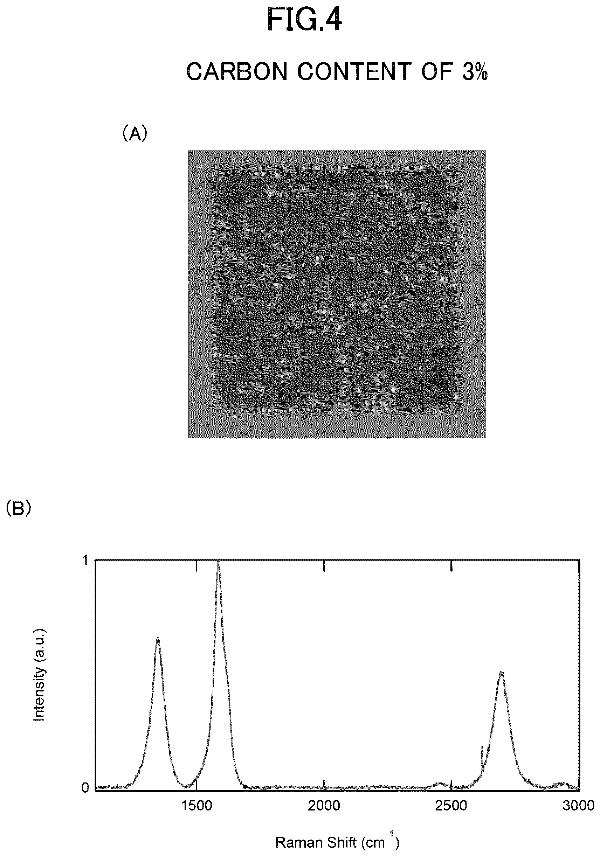

FIGS. 4 to 11 show microscopic images and Raman spectra of graphene formed by variously changing the carbon content (molar ratio) in the carbon-containing metal thin film 12. Graphene in FIGS. 4 to 11 is formed under the same conditions except for the ratio between a metal target and a solid carbon target. An Ni target is used as the metal target. A carbon-containing metal thin film 12 is formed on a silicon substrate having an oxide film by electron beam deposition at room temperature. "Room temperature" means that the film is formed without heating the substrate. The substrate on which the carbon-containing metal thin film 12 is formed is put in an electric furnace and heated at approximately 1,000°C for approximately 1 minute to 3 minutes without introduction of a carbon raw material gas containing organic molecules, such as hydrocarbon gas and the like. After heating is completed, metal particles are removed by wet etching. The ratio between the metal target and the solid carbon target, that is, the proportion of the solid carbon relative to the total targets, is almost the same as the proportion of carbon contained in the single-layer carbon-containing metal thin film formed.

FIG. 4 shows a microscopic image (A) and Raman spectrum (B) of graphene when a carbon-containing metal film containing 3mol% of carbon was formed. A G-band peak was observed around 1,580 cm⁻¹, and successful growth of graphene was confirmed. A 2D-band peak was observed around 2,700 cm⁻¹. The G-band peak is a peak attributable to an in-plane motion of carbon atoms. The 2D peak represents the secondary scattering of phonons and is related to the thickness of the graphene formed. The 2D peak appears on the higher frequency side of 2,680 cm⁻¹ to 2,685 cm⁻¹, which is a typical 2D peak of single-layer graphene, indicating that multilayer graphene was formed on the substrate. The D-band peak was observed around 1,350 cm⁻¹. The G-band and the 2D-band are peaks unique to graphene, and it is clear that multilayer graphene was formed reliably when the carbon content in the carbon-containing metal film was 3%. Successful growth of graphene was also confirmed when a carbon-containing metal film containing 5mol% of carbon was formed, as in the case of the carbon-containing metal film containing 3mol% of carbon.

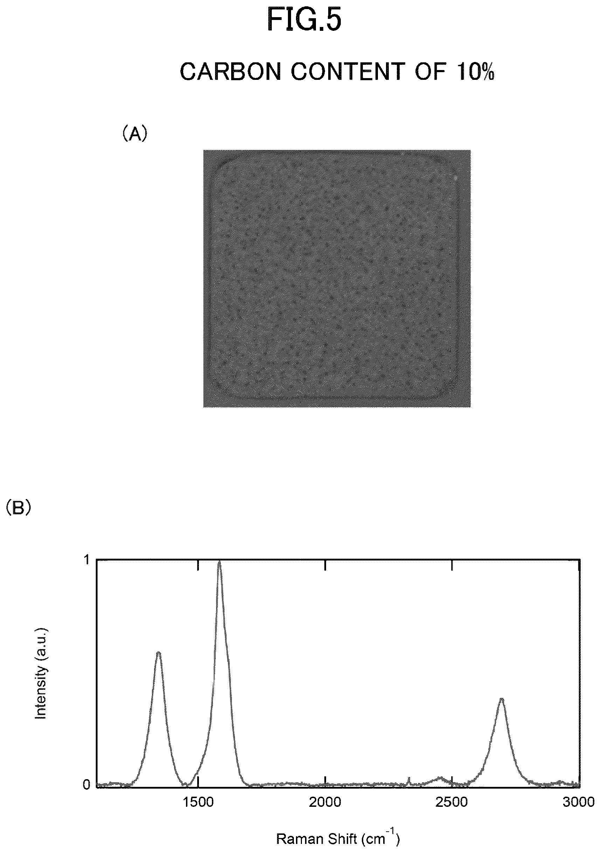

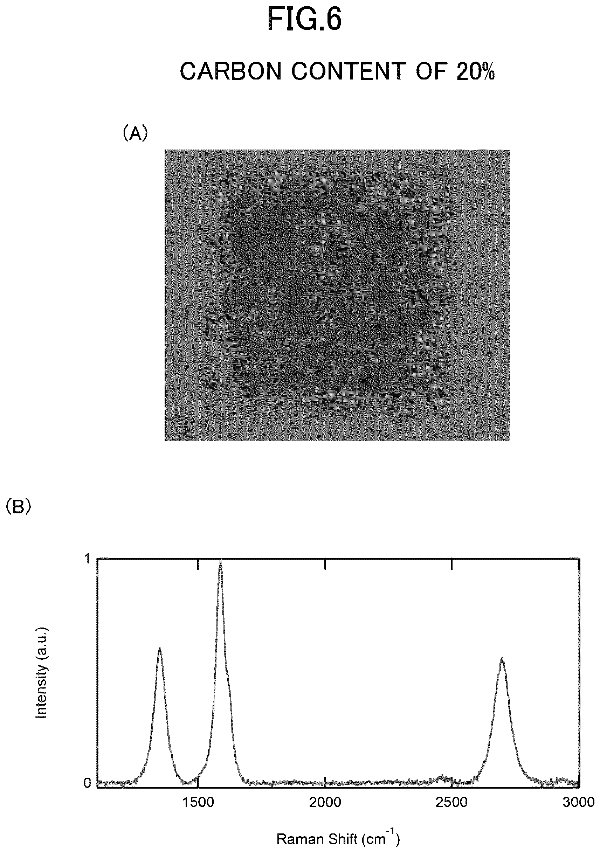

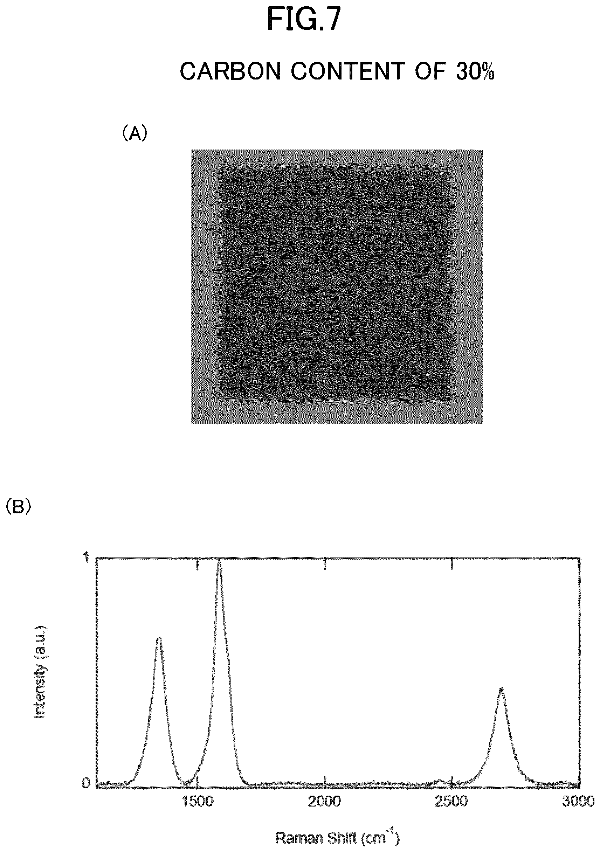

FIG. 5 shows a microscopic image (A) and Raman spectrum (B) of graphene when a carbon-containing metal film containing 10mol% of carbon was formed. FIG. 6 shows a microscopic image (A) and Raman spectrum (B) of graphene when a carbon-containing metal film containing 20mol% of carbon was formed. FIG. 7 shows a microscopic image (A) and Raman spectrum (B) of graphene when a carbon-containing metal film containing 30mol% of carbon was formed. In all of FIGS. 5 to 7, the G-band and 2D-band peaks were clearly observed.

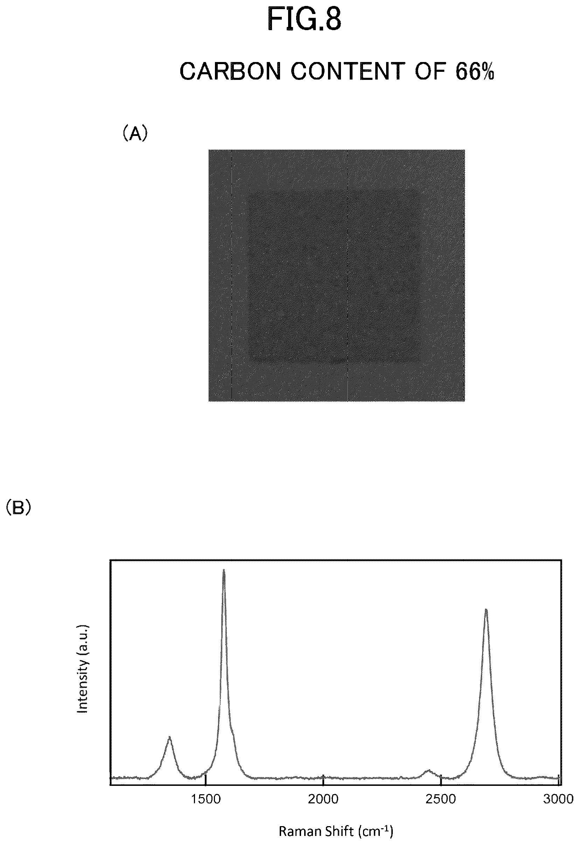

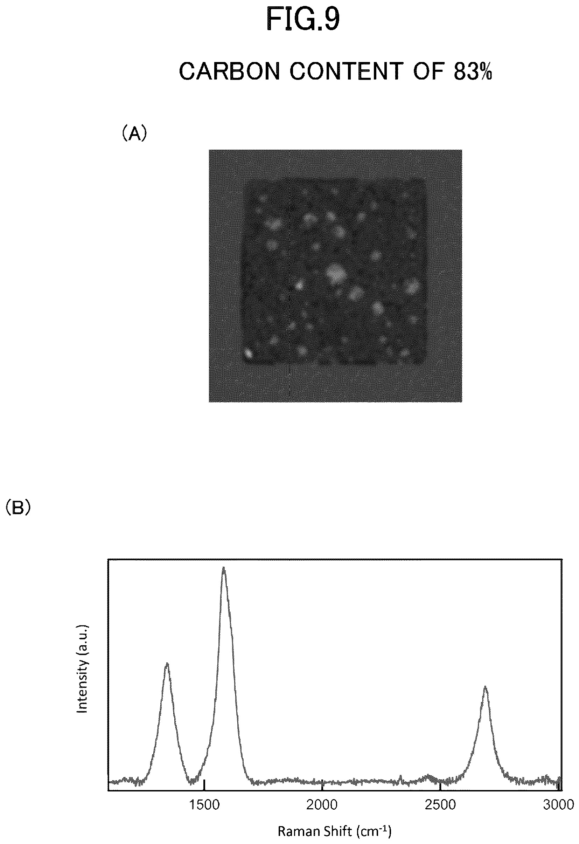

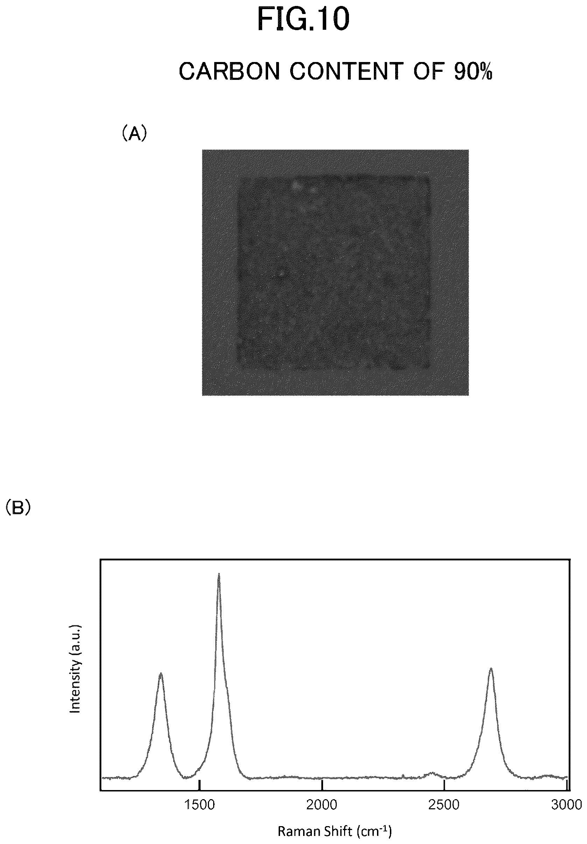

FIG. 8 shows a microscopic image (A) and Raman spectrum (B) of graphene when a carbon-containing metal film containing 66mol% of carbon was formed. FIG. 9 shows a microscopic image (A) and Raman spectrum (B) of graphene when a carbon-containing metal film containing 83mol% of carbon was formed. FIG. 10 shows a microscopic image (A) and Raman spectrum (B) of graphene when a carbon-containing metal film containing 90mol% of carbon was formed. In FIGS. 8 to 10 as well, peaks where observed in the G band and the 2D band that are unique to graphene were observed.

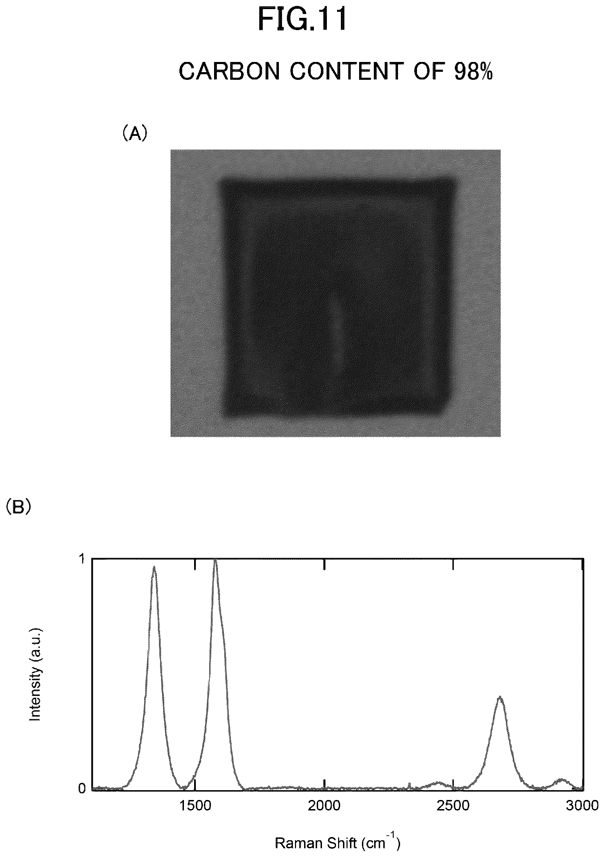

FIG. 11 shows a microscopic image and Raman spectrum of graphene when a carbon-containing metal film containing 98mol% of carbon was formed. In FIG. 11 as well, peaks were observed in the G band and the 2D band that are unique to graphene.

The results of FIGS. 4 to 11 indicate that it is possible to form a multilayer graphene layer having a desired area or a desired shape, by forming a single-layer carbon-containing metal film containing 3mol% or greater and 98mol% or less, preferably 5mol% or greater and 98mol% or less, and more preferably 10mol% or greater and 98mol% or less of carbon and thermally treating it without introduction of a carbon raw material gas using organic molecules, such as hydrocarbon gas and the like.

<Graphene Light Emitting Element on Optical Interference Element>

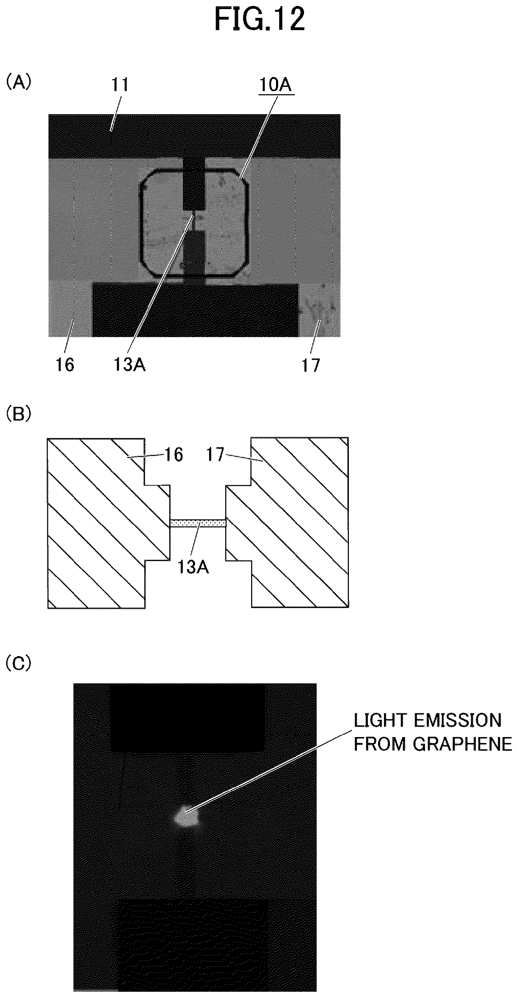

FIG. 12 shows images and a schematic diagram of a graphene device 10A in which a graphene light-emitting element is formed on an optical interference element. FIG. 12 (A) is an optical microscopic image of the graphene device 10A, FIG. 12 (B) is a schematic plan view of the graphene device 10A, and FIG. 12 (C) is an image showing light emission from the graphene light emitting element.

An SOI substrate is used as a substrate 11. The optical interference element is formed by etching a silicon single crystal film on a surface of the SOI with KOH, and a surface of the optical interference element is coated with silicon oxide. The optical interference element has a trapezoidal cross-sectional shape. A graphene layer 13A is formed at a predetermined location of the silicon oxide film on the upper surface of the trapezoidal shape, and a pair of electrodes 16 and 17 are connected to the graphene layer 13A. The graphene layer 13A is obtained by forming a single-layer carbon-containing metal thin film 12, thermally treating it without introducing a carbon raw material gas containing organic molecules, and removing a precipitated metal after the thermal treatment. Here, the single-layer carbon-containing metal thin film 12 is formed using a target in which the mole ratio between solid carbon and Ni is 90%:10%. The entire wafer is put into an infrared heating furnace, and annealed without introduction of a carbon raw material gas, and precipitated metal particles are removed, to obtain the graphene layer 13A.

The electrodes 16 and 17 connected to both ends of the graphene layer 13A are formed. The electrodes 16 and 17 are, for example, Ti/Au electrodes formed by a lift-off method. Upon feeding power to the graphene layer 13 through the electrodes 16 and 17, light emission from the graphene layer 13A is observed, as shown in FIG. 12 (C).

Since the metal is contained in the carbon-containing metal thin film 12 in a small amount and has almost no adverse impact on the underlying optical interference element, it is possible to grow the graphene layer 13 on the optical interference element by appropriately designing the thickness of the silicon oxide film. It is possible to sufficiently bring out the performance of both the graphene light emitting element and the underlying optical interference element.

### <Optical Device Using Graphene and Optical Waveguide on Chip>

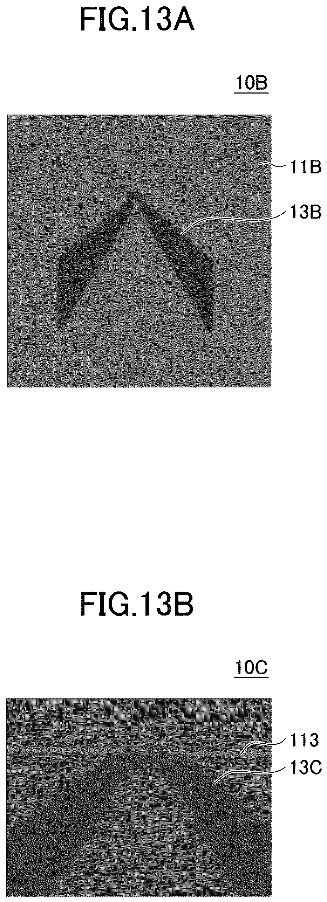

FIG. 13A is an optical microscopic image of a graphene device 10B including a graphene layer 13B formed on a substrate 11B having a silicon photonics element. FIG. 13B is an optical microscopic image of a graphene device 10C in which a graphene layer 13C is provided on an optical waveguide 113. A silicon single crystal film on a surface of an SOI substrate is etched, to form silicon photonics elements including the optical waveguide 113 and an optical resonator, which are formed of silicon thin wires. The graphene devices 10B and 10C are obtained by coating the silicon photonics elements and forming graphene. By connecting electrodes to both ends of the graphene layers 13B and 13C, it is possible to obtain the graphene optical devices. The graphene devices 10B and 10C are devices allowing power to be fed to the graphene layers 13B and 13C, and function as optical devices utilizing silicon photonics. For example, they can be applied to: optical switches that switch light travel directions by switching ON or OFF graphene formed on various optical waveguides or optical resonators; optical phase modulating elements that change the refractive index of waveguides; optical modulators that change the light transmittance via graphene; and the like.

### <Graphene Optical Element on Cantilever>

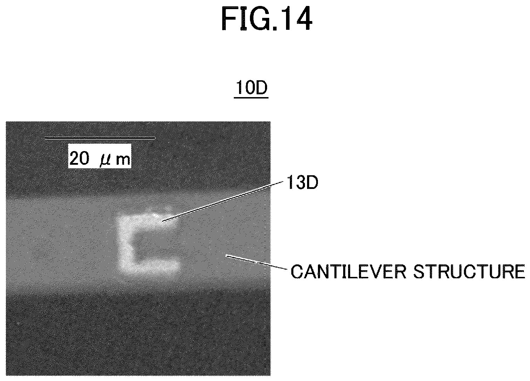

FIG. 14 is an optical microscopic image of a graphene device 10D in which multilayer graphene is applied to a cantilever structure. Cantilevers made of silicon or silicon nitride are used in atomic force microscopes, and have minute structures. Cantilevers have extremely small thicknesses of some hundreds of nanometers to some micrometers, and are broken while being transferred, according to existing graphene transfer techniques, such as mechanical peeling and the like.

In FIG. 14, a multilayer graphene layer 13D is formed on a previously manufactured silicon cantilever structure by the method of the embodiment. That is, a single-layer carbon-containing metal thin film 12 is formed at a desired location on the cantilever, and the entire film is thermally treated without introduction of a carbon raw material gas containing organic molecules, to form graphene, and then the separated metal is removed by etching. As a result, the multilayer graphene layer 13D is formed even on the cantilever structure that is mechanically fragile. Various optical devices, such as light emitting elements, light receiving elements, and the like, and thermal devices based on microheaters can be manufactured from the multilayer graphene on the cantilever. The graphene device 10D also does not require transferring and can be mass-produced.

### <Bridged Graphene Device>

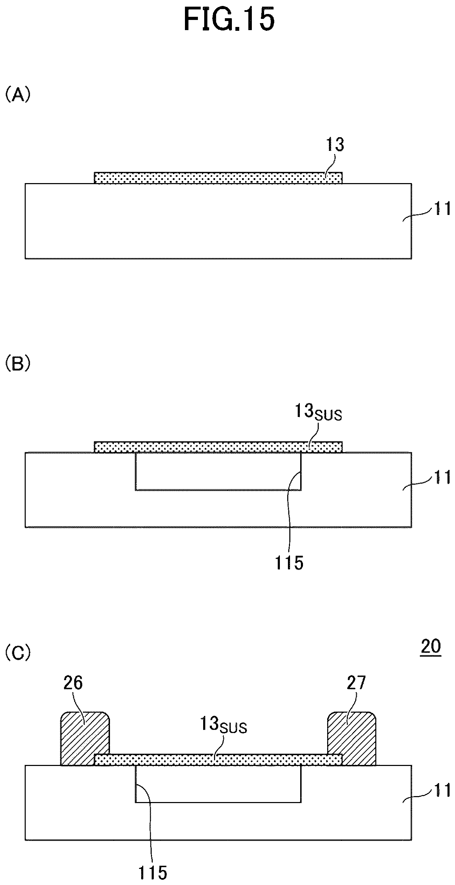

FIG. 15 shows diagrams of a process for manufacturing a bridged graphene device 20 using the graphene layer 13 grown by the method of the embodiment. In FIG. 15 (A), the multilayer polycrystalline graphene layer 13 is formed on a substrate 11 by the method described with reference to FIGS. 1 and 2. As an example, a silicon substrate or a silicon oxide substrate is used as the substrate 11. Next, in FIG. 15 (B), a part of the substrate 11 under the graphene layer 13 is removed by liquid phase or vapor phase etching to form a void 115 under the graphene layer 13. Thus, bridging graphene 13_{SUS} that bridges the void 115 is obtained. In FIG. 15 (C), electrodes 26 and 27 to be connected to the bridging graphene 13_{SUS} are formed. Thus, the bridged graphene device 20 is obtained.

Since the graphene and the substrate 11 do not corrode or fuse with each other, the graphene layer 13 of a high quality is formed on the substrate 11. The bridged graphene structure is obtained by partially removing the substrate 11 under the graphene layer 13 by etching. The shape of the graphene layer 13 to be formed can be any shape, such as a rectangular shape, a bow-tie type constricted structure, and the like, as long as the carbon-containing metal thin film having the shape can be patterned on the substrate 11 beforehand. In addition, as will be described later, it is also possible to form bridging graphene supported by electrodes and the like, by forming structures, such as electrodes and the like, on the graphene and then etching the entirety of the substrate using an etching method by which the structures, such as the electrodes and the like, are not etched. Therefore, the etching process can be included in any of the steps of graphene device manufacture.

By forming the electrodes 26 and 27 connected to the bridging graphene 13_{SUS} and other necessary structures, it is possible to manufacture minute optical devices, thermal devices, electronic devices, or mechanical devices, such as infrared light emitting elements, MEMS, and the like using the bridging graphene 13_{SUS}. In the foregoing description, a silicon substrate or a silicon oxide substrate is removed by etching to form the void 115. However, as long as the substrate part under the graphene layer 13 can be removed by liquid phase or vapor phase etching, the etching method and the type of the substrate do not matter. As the location of the substrate 11 to be etched, only a part of the substrate 11 can be removed while maintaining the graphene layer 13 by forming a mask by lithography or the like. Therefore, a bridging structure of the graphene, both ends of which are supported, can be easily manufactured. Furthermore, by forming structures, such as the electrodes and the like, on the graphene, and subsequently etching the entire structure, it is possible to manufacture bridging graphene supported by the structures, such as the electrodes and the like, without the need to form a mask by lithography. A complex device may be manufactured by further forming another device in addition to the bridged graphene device 20 formed in this way. For example, the graphene layer 13 may be kept as is in somewhere other than the region on which the bridging graphene 13_{SUS} is to be formed, and an optical device, a thermal device, an electronic device, a mechanical device, or the like may be manufactured using the kept graphene layer 13.

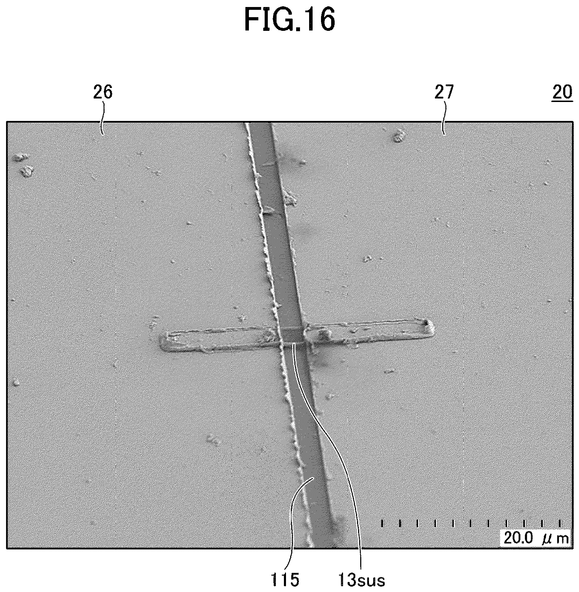

FIG. 16 is an electron microscopic image of the manufactured bridged graphene device 20. The bridged graphene device 20 is manufactured by forming the electrodes 26 and 27 on the graphene layer 13 grown on the substrate 11 and then etching the entire structure, without a lithography step of forming a mask. The carbon content in the carbon-containing metal thin film 12 when forming the graphene layer 13 is 90%, and the multilayer graphene shown in FIG. 10 is obtained. The electrodes 26 and 27 are connected to the graphene layer 13, and then the substrate under the graphene layer 13 is etched, to make the bridging graphene 13_{SUS} float above the void 115 while being supported by the electrodes 26 and 27.

As described above, the graphene growing method and the method for manufacturing a graphene device according to the embodiment are characterized by using a single-layer carbon-containing metal thin film containing carbon exceeding the solid solubility limit. The methods are also characterized by being capable of stably forming multilayer graphene in the carbon content range of 3mol% or greater and 98mol% or less, by thermally treating the formed single-layer carbon-containing metal thin film, without introducing a carbon raw material gas using organic molecules, such as hydrocarbon gas and the like. By the methods, not only optical devices, but also thermal devices, electronic devices, mechanical devices, and the like can be manufactured, and the following effects can be obtained.
(1) No multilayer structure including pure carbon and pure metals is necessary, the manufacturing process can be simplified, and costs can be significantly reduced.
(2) Multilayer graphene can be formed with a small amount of a metal. It is possible to obtain multilayer graphene with a sufficient amount of carbon, without being constrained by carbon solid solubility limit of the catalytic metal, and without introducing a carbon raw material gas using organic molecules.
(3) When existing graphene direct growing methods are applied to optical devices and thermal devices, the optical devices and thermal devices previously formed on substrates come into direct contact with the metal layers in multilayer films or the metal in metal-dominant solid solutions. In this case, the metal diffuses into the optical devices and thermal devices through the thermal treatment, damaging the devices. On the other hand, the methods of the embodiment use a single-layer carbon-containing metal thin film containing carbon exceeding the solid solubility limit, and involve no pure metal layer. The methods can restrict damage to the optical devices and thermal devices, and are optimal for graphene formation on substrates on which devices have been previously formed.
(4) By blending the Zn element in the metal contained in the carbon-containing metal thin film, it is possible to lower the thermal treatment temperature for graphene formation.
(5) By previously processing the shape of the carbon-containing metal thin film by microfabrication, it is possible to form a graphene layer on a partial region on a chip, and to reduce costs.
(6) Since transfer, which has been necessitated heretofore, is unnecessary, it is possible to form multilayer graphene on structures having a low mechanical strength easily, and to realize mass-production as well.

The present invention is applicable not only to the field of nanotechnology and materials, but also to manufacture of silicon photonics elements, light emitting elements, and light receiving elements for optical communications.

The present application claims priority based on Japanese Patent Application No. 2023-26252, filed on February 22, 2023, and Japanese Patent Application No. 2023-63503, filed on April 10, 2023, and includes the entire contents of these Japanese Patent Applications.

### REFERENCE SIGNS LIST

10, 10A, 10B, 10C, 10D: graphene device
11, 11A, 11B: substrate
12: carbon-containing metal thin film
13, 13A to 13D: graphene layer
13_{SUS}: bridging graphene
14: metal particles
16, 17, 26, 27: electrode
20: bridged graphene device
110: oxide film
113: optical waveguide
114: insulating layer
115: void

## Claims

1. A graphene growing method, comprising:
forming a carbon-containing metal thin film containing carbon as a single layer on a substrate, such that the carbon-containing metal thin film contains the carbon in an amount exceeding a solid solubility limit and a content of the carbon in the carbon-containing metal thin film is 3mol% or greater and 98mol% or less;
subjecting the carbon-containing metal thin film to thermal treatment without introduction of a carbon raw material gas using an organic molecule, to form graphene, and to separate a metal contained in the carbon-containing metal thin film; and
removing the separated metal, after completion of the thermal treatment.

2. The graphene growing method according to claim 1,
wherein multilayer graphene is formed and the metal is precipitated through the thermal treatment without introduction of the carbon raw material gas, and
the precipitated metal is removed after completion of formation of the multilayer graphene.

3. The graphene growing method according to claim 1,
wherein the thermal treatment is performed in a vacuum or at reduced pressure without introduction of the carbon raw material gas in an atmosphere of an inert gas or a reducing gas.

4. The graphene growing method according to claim 1,
wherein the carbon-containing metal thin film is heated in a vacuum or at reduced pressure in an atmosphere of an inert gas or a reducing gas, to form graphene and to precipitate the metal contained in the carbon-containing metal thin film, and
the precipitated metal is removed by etching after completion of the thermal treatment.

5. The graphene growing method according to claim 4,
wherein a temperature at which the etching is performed is lower than a temperature of the thermal treatment.

6. The graphene growing method according to claim 1,
wherein the carbon-containing metal thin film is formed by physical vapor deposition using targets containing the metal and solid carbon.

7. The graphene growing method according to claim 6,
wherein a ratio of the solid carbon to a total of the targets is 3% or greater and 98% or less.

8. The graphene growing method according to claim 1,
wherein a thin film of a second metal, a semiconductor, or an insulator that does not affect graphene growth is provided in an overlying layer or an underlying layer of the carbon-containing metal thin film.

9. The graphene growing method according to any one of claims 1 to 8,
wherein an optical device, a thermal device, an electronic device, or a mechanical device is previously formed on the substrate before the carbon-containing metal thin film is formed.

10. A method for manufacturing a graphene device, the method comprising:
forming a carbon-containing metal thin film containing carbon as a single layer on a substrate, such that the carbon-containing metal thin film contains the carbon in an amount exceeding a solid solubility limit and a content of the carbon in the carbon-containing metal thin film is 3mol% or greater and 98mol% or less;
subjecting the carbon-containing metal thin film to thermal treatment without introduction of a carbon raw material gas using an organic molecule, to form graphene, and to separate a metal contained in the carbon-containing metal thin film;
removing the separated metal, after completion of the thermal treatment, to form a graphene layer; and
forming an optical device, a thermal device, an electronic device, or a mechanical device by using the graphene layer.

11. The method for manufacturing the graphene device according to claim 10,
wherein the separated metal is removed at a temperature lower than a temperature of the thermal treatment.

12. The method for manufacturing the graphene device according to claim 10,
wherein prior to the forming of the carbon-containing metal thin film, another optical device, another thermal device, another electronic device, or another mechanical device is previously formed on the substrate,
an insulating layer is formed on the another optical device, the another thermal device, the another electronic device, or the another mechanical device, and
the carbon-containing metal thin film is formed on the insulating layer.

13. The method for manufacturing the graphene device according to claim 10,
wherein a part of the substrate under the graphene layer is removed, to form a void and bridging graphene that bridges the void, and
the optical device, the thermal device, the electronic device, or the mechanical device is formed by using the bridging graphene.
